# EUROPEAN PATENT APPLICATION

(11) **EP 4 711 075 A1**
(43) Date of publication of application: **18.03.2026**
(21) Application number: 24200072.7
(22) Date of filing: 12.09.2024
(51) Int. Cl.: B23Q 1/01, B23Q 1/48, B23Q 1/62

(54) **A MACHINE TOOL FOR MACHINING A WORKPIECE**

(71) Applicant: United Machining Mill AG, 3550 Langnau im Emmental (CH)
(72) Inventor: Aeschbacher, Timon, 3605 Wattenwil (CH); Scheidegger, Andreas, 3510 Konolfingen (CH); Bahaloo Horeh, Soulmaz, 3550 Langnau i. E. (CH)
(74) Representative: Arend, Christa

(57) **Abstract**

The present invention is related to a machine tool for machining a workpiece. The machine tool comprises a machine bed, a machine table mounted on the machine bed for mounting the workpiece thereon and a machine column mounted on the machine bed for mounting a spindle thereon, wherein the machine table is configured to be translationally moved horizontally in direction of a first linear axis (X) and to be swiveled about a first swivel axis (A) which is in parallel to the first linear axis, wherein the machine table is configured to rotate about a first rotation axis (B) perpendicular to the first swivel axis, wherein the spindle is configured to be translationally moved horizontally in direction of a second linear axis (Z) and vertically in direction of a third linear axis (Y) and rotated around a second rotation axis (C) in parallel to the second linear axis.

## Description

### FIELD OF THE INVENTION

The present invention is related to a machine tool for machining a workpiece. In further, the present invention is related to a method for machining a workpiece.

### BACKGROUND OF INVENTION

Machine tools are widely used for carrying out machining processes on workpieces. In particular, machine tools have the importance of reliably and accurately machining workpieces to product parts applied for turbine engines both in the field of aerospace and power generation. Such parts feature complex geometry due to the curved surfaces. Moreover, not only high surface quality but also high machining reliability and robustness are required.

In general, such parts are manufactured by five-axis machine tools. US 2019/0030666 discloses a machine tool which is particularly suitable for machining of bladed wheels. The machine tool has a first horizontal linear guide and a second horizontal linear guide arranged at right angles to the first linear guide. On the first linear guide is arranged, in an axially displaceable manner, a workpiece clamping fixture, which Is swivelable about a swivel axis oriented parallel to the second linear guide and is mountable about a rotation axis oriented at right angles to the swivel axis. On the second linear guide a toque motor driven swivel arm is axially displaceable, the swivel axis of which is arranged parallel to the first linear guide which on its free end bears a tool spindle, the axis of which is oriented parallel to the first linear guide. However, during acceleration the swivel axis and the first linear axis have an influence on each other such that a so-called cross talk is generated. Additionally, the footprint of the machine, namely the physical space that the machine tool required is relatively large.

A machine center G350 provided by the company Grob-Werke GmbH is also applied for such application. However, this machine tool has several drawbacks for the kinematic arrangement. For example, the vertical axis is arranged on the side of the workpiece, namely the machine table is mounted on the vertical linear guides. Due to the heavy or variable workpiece load, such arrangement has a direct negative impact on the machining quality and the energy efficiency, because there is a cross talk between the vertical linear axis and the swiveling table.

JP 2007229849 discloses a machine tool which can accurately and efficiently machine a three-dimensional recessed curved surface to be used in a jet engine and a machining method using this machine tool. It focuses on optimizing the machining path to achieve the machining accuracy and efficiency. Disadvantages are the vertical spindle for milling deep cavities and the visual access during process setup.

### SUMMARY OF THE INVENTION

It is an objective of present invention to provide a machine tool for machining a workpiece with an improved machining quality. In particular, it is a further objective of the present invention to provide a machine tool for machining a workpiece with an optimized energy consumption and small footprint. Moreover, it is a further objective of the present invention to provide a machine tool with high robustness.

According to the present invention, these objectives are achieved through the features of independent claims. In addition, further advantageous embodiments follow from the dependent claims and the description.

In the present invention, a machine tool for machining a workpiece is provided. The machine tool comprises a machine bed, a machine table mounted on the machine bed for mounting the workpiece thereon and a machine column mounted on the machine bed for mounting a spindle thereon. A machining tool can be clamped in the spindle for machining the workpiece. The machine table is configured to be translationally moved horizontally in direction of a first linear axis and to be swivel about a first swivel axis which is in parallel to the first linear axis. The machine table is configured to rotate about a first rotation axis perpendicular to the first swivel axis. The spindle is configured to be translationally moved horizontally in direction of a second linear axis and vertically in direction of a third linear axis and rotated about a second rotation axis in parallel to the second linear axis.

The machine tool of the present invention is designed particularly for machining a part having curved surfaces with five-axis simultaneous machining. For example, a part applied for turbine engines both in the field of aerospace and power generation have curved surfaces. In particular, the machine tool is applied to manufacture the bladed wheels for turbines and compressors, so called bladed discs also referred to as blisks or IBRs (integrally bladed rotors).

The 5-axis machine tool provides three linear axes, namely the first linear axis, the second linear axis and the third linear axis for interacting between the machining tool and the workpiece. In the present invention, the machining tool can be moved in two linear axes and the workpiece can be moved in one linear axis. Workpiece can have a high weight, in particular, in blisks machining the weight of the workpiece is e.g. 350kg. Compared to the workpiece the spindle has a lighter weight such as 90 kg. Therefore, it is advantageous to have less linear axes on the workpiece side to balance the inertia and improve the energy efficiency.

In particular, the vertical movement is realized on the side of machining tool by moving the spindle in the vertical direction. Since in most of applications the spindle has less weight than the workpiece and the spindle has a constant inertia, it is advantageous to arrange the lightest axis in direction of the gravity. For this reason, the linear axis in the vertical direction is arranged on the side of the machining tool.

Moreover, the swivel axis of the machine table is in parallel to the direction of the linear movement of the machine table. If the linear axis is not in parallel to the swivel axis, it can generate so called cross talk. This means, the acceleration on the linear axis can have a negative impact on the swivel axis. Such cross talk can be seen on the produced part, in particular the surface quality is improved which reduces the risk of cracks on the surface. If the linear axis is in parallel to the swivel axis, the cross talk can be eliminated.

Applying the machine tool of the present invention, efficient roughing and dynamic finishing for full blisks production in one setup can be achieved. Overhead machining by providing the high range swivel machine table and horizontal spindle orientation results in optimal chip flow and increase the machining quality. Simultaneous and intricate 5-axis movement are achieved.

In one embodiment, a first linear guide is horizontally mounted on the machine bed with the longitudinal direction in parallel to the direction of the first linear axis and the machine table is moveably mounted on the first linear guide. By this way, the machine table can be driven by a motor and a ball screw to move on the first linear guide in the longitudinal direction of the linear guide.

In one variant, a second linear guide is mounted on the column with the longitudinal direction in the direction of the second linear axis. A third linear guide with the longitudinal direction in the direction of the third linear axis is mounted on a cross slider moveably mounted on the second linear guide. The spindle is mounted on the third linear guide.

In one preferred variant, the second linear guide is directly mounted on the column. Guide shoes are fixed on one surface of the cross slider and moveably mounted on the second linear guide for guiding the cross-slider on the second linear guide. On the opposite surface of the cross slider the third linear guide is mounted.

In one advantageous variant, the cross slider is designed to at least partially adopt the spindle shape to save space. In particular, the slider does not have a rectangular shape.

In another variant, a third linear guide is mounted on the column with the longitudinal direction in the direction of the third linear axis. A second linear guide with the longitudinal direction in the direction of the second linear axis is mounted on the cross slider moveably mounted on the third linear guide. The spindle is mounted on the second linear guide.

For example, the first linear guide is arranged with the longitudinal direction in X direction. Thus, the machine table moves linearly in X direction. The swivel axis is also directed to the X direction. The first rotation axis is directed to the Y direction. The second linear guide is arranged with the longitudinal direction in Z direction. The cross slider linearly moves in the Z direction. The third linear guide is arranged with the longitudinal direction in the Y direction such that the cross slider having the spindle mounted thereon can move in the Y direction. Thus, the spindle can move in two linear axes, Y and Z. The rotation axis of the spindle is directed to the Z direction which is in parallel to the second linear axis. The machine table is configured to execute the rotatory motion and the swivel motion.

In a particular variant, only the first linear guide is directly mounted on the machine bed. The second linear guide and the third linear guide are mounted on the column and not directly mounted on the top surface of the machine bed.

In a preferred variant, the column is fixed on the machine bed and is not moveable. Since the second linear guide and the third linear guide are mounted on the column, only the spindle not the whole column must move on the linear guide. This can ease the design of the machine tool since less mass has to be moved.

In general, the airfoil does not have a large height, for example, a blisks is a part having low height. Normally, a disc-shaped blank is supplied and lays flat on the machine table during the machining. For producing such part, the required machining stroke in the vertical direction is small, and the machining tool must only be moved in a small range in the vertical direction. Therefore, the gravity center of the machine tool is still low even the spindle must be moved in the vertical direction along the linear guide mounted on the machine column.

In an advantageous variant, the machine column has a mounting surface on which the linear guide is mounted, wherein the machine column stands on the machine bed with the mounting surface perpendicular to the first linear axis. The machine column is positioned on the side of the machine table. The spindle is mounted on the machine column in a manner that the rotation axis is in parallel to the mounting surface. The machining tool interacts with the workpiece from the side of the machine table horizontally. Additionally, the spindle nose is positioned closely to the second linear axis, because the longitudinal direction of the spindle is parallel to the mounting surface of the column not perpendicular to the mounting surface of the column. This has the advantage that less moment is generated on the second linear guide and the stability can be improved. The machine column is a vertical structural component and is made of for example cast iron or steel for providing sufficient support and the rigidity to carry the spindle.

In some embodiments, the machine table is a swivel table and a rotatory table is mounted on the swivel table. The swivel table is movably mounted on the first linear guide. The swivel axis is in parallel to the direction of the linear movement of the swivel table. In further, a rotatory table is rotatably mounted on the swivel table. The workpiece is machined on the rotatory table such that it can rotate about the first rotation axis and swivel about the swivel axis.

In particular, the swivel is supported exclusively on one side.

In a preferred variant, a cavity is provided in the machine bed for collecting swarf and the cavity is provided next to the first linear guide such that the machine table is located above the cavity.

Particularly, a pair of first linear guide rails are mounted on the machine table and the cavity is arranged between the two linear guide rails. Due to the swivel movement of the swivel table, the chips generated during the machining can easily fall into the cavity.

In one particular variant, the swivel axis is asymmetrically arranged relative to the two linear guides rails.

In one advantageous variant, the machine table is configured to be moved linearly exclusively in one direction of the linear axis.

In some embodiments, linear motors are provided for driving the linear axes. The linear motors enable to improve process stability, eliminate vibration and reduce wear.

In some embodiments, a torque motor is provided for driving the swiveling and rotary axes. The torque motors enable to improve process stability, eliminate vibration and reduce wear.

In a preferred variant, at least one ball screw is mounted for driving one linear axis. In particular, three ball screws are provided to drive three linear axes, respectively. Driving the linear axis by the ball screw ensures a high repetition accuracy and high efficiency of the movement.

The present invention is related to a method for machining a workpiece. The machine tool comprises a machine bed, a machine table for mounting the workpiece thereon and a spindle for mounting a machining tool therein for machining the workpiece, wherein the workpiece is moved linearly in a first linear direction and swiveled around a first swivel axis and rotated around a first rotation axis, wherein the first linear axis is in the horizontal direction and in parallel to the first swivel axis and orthogonal to the first rotation axis, wherein the spindle is linearly movable in a second linear axis and a third liner axis and rotatable around a second rotation axis, wherein the second linear axis is horizontally directed and the third linear axis is vertically directed, wherein the first linear axis, the second linear axis and the third linear axis are orthogonal to each other, wherein the second rotation axis is in parallel to the second linear axis.

### BRIEF DESCRIPTION OF THE DRAWINGS

In the following, a more particular description of the present invention is further described. The embodiments are described and explained with details with reference to accompanying drawings in which:
- Fig. 1: illustrates a three-dimensional view of a machine tool of the prevent invention;
- Fig. 2: illustrates a front view of the machine tool;
- Fig. 3: illustrates a top view of the machine tool; and
- Fig. 4: illustrates a side view of the machine tool.

### EXEMPLARY EMBODIMENTS

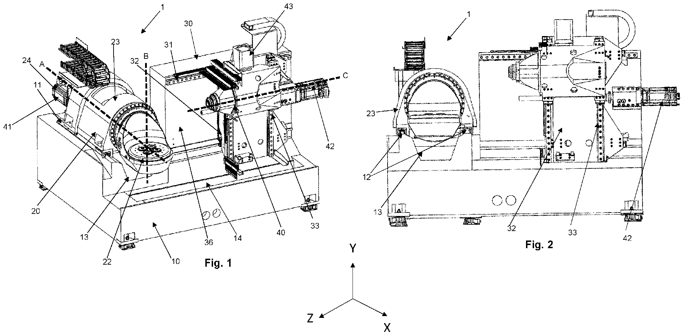

Figure 1 illustrates a three-dimensional view of the machine tool 1. Figure 2 illustrates a front view of the machine tool. The machine tool comprises a machine bed 10 on which a first linear guide 11 and a machine column 30 are mounted.

The first linear guide is arranged horizontally on the top surface of the machine bed and its longitudinal direction is directed in the X direction. The first linear guide has a pair of linear guide rails 12 on which the machine table can move translationally in the X direction. For the horizontal motion in the X direction a first ball screw 41 is provided. Between two linear guide rails a cavity 13 is formed in the machine bed for receiving the chips generated during the machining. The machine table 20 is a swivel table which sits on the first pair of linear guide rails. The swivel axis of the swivel table denoted as A axis is in parallel to the longitudinal direction of the first linear guide, namely directed in X direction. A rotatory table 22 is mounted on the swivel table. For machining, the workpiece is clamped on the rotatory table such that the workpiece is rotatable about a rotation axis and swivelable about a swivel axis A. The rotation axis of the rotatory table denoted as B axis is in the vertical direction, which is orthogonal to the swivel axis. As shown in the figure 2 the lowest part of the swivel table is located in the first cavity. In addition, a sealing cover 23 is arranged around the machine table and fixed on the table structure. It can be seen more clearly in figure 2 the sealing cover has a shape of half pipe. this shape moves forth and back under a fixed sealing which is connected to the machine bed (not visible in drawing). This sealing cover is applied to separate the machining area from the rest of area in the machine tool.

The machine column 30 is mounted on the side of the machine table, in particular not in the front of the machine table. The machine column has a mounting surface 36 which is its front surface. On this surface a second linear guide 31 is mounted with the longitudinal direction in the horizontal direction and in the Z direction. A second pair of guide rails are mounted on the mounting surface. The column is mounted on the machine bed in a manner that the mounting surface is orthogonal to the longitudinal direction of the first linear guide. A cross slider is mounted on the second linear guide such that it can move along the second pair of guide rails to move in the Z direction. A second ball screw 42 is mounted below the spindle for driving the cross slider to move on the second linear guide. The cross slider has two opposite surfaces. One surface is in contact with the second linear guide and on the opposite surface a third linear guide 33 is mounted. A spindle 40 is moveably mounted on the third linear guide with the rotation axis C in the horizontal direction and in parallel to the second linear guide. Thus, the spindle can be translationally moved in the Y direction and the Z direction and rotated about the second rotation axis C. A third ball screw 43 is provided to drive the movement of the spindle on the third linear guide.

The machine bed has a step in the front area. The front part of the machine bed has less height than the back part of the machine bed on which the first cavity is formed and the machine column is mounted. On the lower part a recess 14 is formed to be able to collect the chips and coolant from the machining area. Additionally, the enclosure of the machine is attached on the lower part. The front is defined as the side facing to the machine table and the spindle. The cross slider is vertically extended to the lower part of the step.

Figure 2 illustrates the front view of the machine tool.

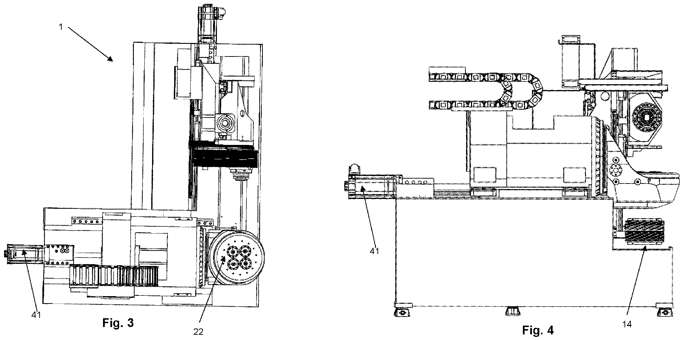

The figures 3 and 4 illustrate the top view and the side view of the machine tool, respectively.

### LIST OF REFERENCES

- 1: machine tool
- 10: machine bed
- 11: first linear guide
- 12: a first pair of linear guide rails
- 13: cavity
- 14: recess
- 20: machine table
- 22: rotatory table
- 23: sealing cover
- 24: first linear axis driving system
- 30: machine column
- 31: second linear guide
- 32: cross slider
- 33: third linear guide
- 36: mounting surface
- 40: spindle
- 41: first ball screw
- 42: second ball screw
- 43: third ball screw

## Claims

1. A machine tool (1) for machining a workpiece comprising a machine bed (10), a machine table (20) mounted on the machine bed for mounting the workpiece thereon and a machine column (30) mounted on the machine bed for mounting a spindle (40) thereon, wherein the machine table is configured to be translationally moved horizontally in direction of a first linear axis (X) and to be swiveled about a first swivel axis (A) which is in parallel to the first linear axis, wherein the machine table is configured to rotate about a first rotation axis (B) perpendicular to the first swivel axis, wherein the spindle is configured to be translationally moved horizontally in direction of a second linear axis (Z) and vertically in direction of a third linear axis (Y) and rotated around a second rotation axis (C) in parallel to the second linear axis.

2. The machine tool according to claim 1, wherein a first linear guide (11) is horizontally mounted on the machine bed with the longitudinal direction in parallel to the direction of the first linear axis and the machine table is moveably mounted on the first linear guide.

3. The machine tool according to claim 1 or 2, wherein a second linear guide (31) is mounted on the column with the longitudinal direction in the direction of the second linear axis and a third linear guide (33) with the longitudinal direction in the direction of the third linear axis is mounted on a slider moveably mounted on the second linear guide, wherein the spindle is mounted on the third linear guide, in particular the second linear guide is directly mounted on the column.

4. The machine tool according to claim 1 or 2, wherein a third linear guide is mounted on the column with the longitudinal direction in the direction of the third linear axis and a second linear guide with the longitudinal direction in the direction of the second linear axis is mounted on a slider moveably mounted on the third linear guide, wherein the spindle is mounted on the second linear guide.

5. The machine tool according to one of claims 1 to 4, wherein the machine column (30) has a mounting surface (36) on which the linear guide is mounted, wherein the machine column stands on the side of the machine table and with the mounting surface perpendicular to the first linear axis.

6. The machine tool according to one of claims 1 to 5, wherein the machine table is a swivel table and a rotatory table is mounted on the swivel table.

7. The machine tool according to claim 6, wherein the swivel table is supported exclusively on one side.

8. The machine tool according to one of the previous claims, wherein a pair of first linear guide rails are mounted on the machine bed and a cavity is arranged between the two linear guide rails for collecting the swarf.

9. The machine tool according claim 8, wherein the machine table is located above the cavity.

10. The machine tool according to one of claims 1 to 9, wherein the machine table is configured to be moved linearly exclusively in one direction of the linear axis.

11. The machine tool according to one of claims 1 to 10, wherein the machine tool is configured that the spindle is moved linearly exclusively in two directions of the linear axis.

12. The machine tool according to one of claims 1 to 11, wherein at least one axis is directly driven, in particular the linear axis is driven by a linear motor and the rotational axis is driven by a torque motor.

13. The machine tool according to one of claims 1 to 12, wherein at least one linear axis is driven by a ball screw (41, 42, 43).

14. The machine tool according to one of the previous claims, wherein the machine bed and the machine column are made in one part.

15. A method for machining a workpiece to produce a part in particular a blisk comprising a machine bed, a machine table for mounting the workpiece thereon and a spindle for mounting a machining tool therein for machining the workpiece, wherein the workpiece is moved linearly in a first linear direction and swiveled around a first swivel axis and rotated around a first rotation axis, wherein the first linear axis is in the horizontal direction and in parallel to the first swivel axis and orthogonal to the first rotation axis, wherein the spindle is linearly movable in a second linear axis and a third liner axis and rotatable around a second rotation axis, wherein the second linear axis is horizontally directed and the third linear axis is vertically directed, wherein the first linear axis, the second linear axis and the third linear axis are orthogonal to each other, wherein the second rotation axis is in parallel to the second linear axis.
